# EUROPEAN PATENT SPECIFICATION

(11) **EP 4 487 080 B1**
(45) Date of publication and mention of the grant of the patent: **12.11.2025**
(21) Application number: 22714775.8
(22) Date of filing: 04.03.2022
(51) Int. Cl.: G01C 21/34, G08G 1/123, G08G 1/00, G05D 1/00, G06Q 10/04, G06Q 50/40, G08G 1/0968

(54) **METHOD AND DEVICE FOR LOAD-AWARE SCHEDULING OF VEHICLE MOVEMENTS**
VERFAHREN UND VORRICHTUNG ZUR LASTBEWUSSTEN PLANUNG VON FAHRZEUGBEWEGUNGEN
PROCÉDÉ ET DISPOSITIF DE PLANIFICATION DE DÉPLACEMENTS DE VÉHICULES EN FONCTION DE LA CHARGE

(43) Date of publication of application: 08.01.2025
(73) Proprietor: Volvo Autonomous Solutions AB, 405 08 Göteborg (SE)
(72) Inventor: FORCOLIN, Fabio, 416 73 GÖTEBORG (SE); ROGENFELT, Åsa, 414 78 GÖTEBORG (SE)
(74) Representative: Kransell & Wennborg KB
(86) International application number: PCT/EP2022/055619
(87) International publication number: WO 2023/165714

(56) References cited:
- US-A1- 2009 082 949
- US-A1- 2012 330 540
- US-A1- 2016 239 023
- US-A1- 2021 009 160

## Description

### TECHNICAL FIELD

The present disclosure relates to the field of centralized vehicle control, and in particular to a traffic planner for scheduling vehicle movements which takes into account the impact of loading on a vehicle's performance and operational cost.

### BACKGROUND

The energy consumption of a vehicle and the mechanical wear it experiences are heavily influenced by the vehicle's weight. The weight can vary significantly in a commercial vehicle or vehicle combination, between its empty state and fully loaded state. For similar reasons, the available engine and (regenerative) braking power can achieve a more limited peak acceleration and deceleration in the fully loaded state, especially if a safety margin is to be observed. Such performance limitations may negatively affect the vehicle's ability to keep up with the surrounding traffic in challenging topographies, which could be particularly annoying on single-lane roads. Even in a closed environment without other traffic participants, additional time may need to be allocated if the fully loaded vehicle is to climb steep gradients or travel downhill without overheating.

In view of these and similar considerations, vehicle control methods which discriminate between loaded and empty vehicles have been developed and described in the literature. For example, US20180330616A1 discloses a system and a method for navigating a vehicle through a mining environment to a target destination. The system and method may be utilized to avoid contention in the mining environment. A route through the mining environment to the target destination for the vehicle is identified and a first speed profile for at least a portion of the route is determined. A potential contention condition associated with the route is identified and the potential contention condition along the route is used to determine a second speed profile for at least a portion of the route. An optimized speed profile is determined using the first speed profile and the second speed profile, and at least a portion of the optimized speed profile is communicated to the vehicle.

According to US20180330616A1 it is possible to avoid, by optimizing the speed profiles in the manner described, the detrimental scenario where a loaded haul truck is stopped on a positive grade due to contention. In that scenario, the loaded truck will have to depend on the truck's brakes to hold the truck still on the ramp. When it is safe to move, the truck will be forced to use the truck's engine at full power in order to get the truck moving again. The maneuvers in this scenario reportedly consume fuel at a rapid rate and put stress on mechanical and electrical components of the truck.

EP3764187A1 discloses a vehicle scheduling method according to the preamble of claim 1. In particular, the method comprises: receiving an identification reference and a current position of the first vehicle; providing a route of the first vehicle based on the identification reference and the current position of the first vehicle; receiving an identification reference and current position of a second vehicle; providing a route of the second vehicle based on the identification reference and the current position of the second vehicle; detecting an expected location where the route of the first and second vehicle intersect or overlap; detecting an expected time when the first and second vehicle intersect at the expected location; generating adaptation data based on the expected location and the expected time, the adaptation data representing an adaptation of a route parameter of the route of the first or second vehicle; and sending the adaptation data to the client device.

EP3063597A1 discloses system for calculating a desired time of arrival to a target destination for a vehicle. The system applies a rule for the order in which two vehicles should pass a bottleneck of a road. The rule stipulates that the vehicle which indicates that its platform is provided with a load should keep its current speed and pass the bottleneck first.

US2009082949A1 discloses a collision avoidance system to be implemented in construction equipment assets on a common worksite. The collision avoidance system comprises a collision avoidance module that assigns a higher priority to a heavier vehicle than a lighter vehicle.

US2012330540A1 discloses a travel control method for unmanned vehicles that travel along respective travel routes. The method includes a reservation-requested route generation step and an already reserved route generation step. In the second step, a priority rule is applied when a reservation-requested route for the ego vehicle interferes with a reservation-requested route for another vehicle. According to the priority rule, a cargo-loaded vehicle has priority over a non-loaded vehicle, and a vehicle travelling along an uphill road has priority over a vehicle traveling along a downhill road.

### SUMMARY

One objective of the present disclosure is to make available a method for loading-aware scheduling the movements of a plurality of vehicles along predefined routes. A further objective is to provide such a scheduling method which is well scalable with respect to the number of vehicles. A further objective is to provide such a scheduling method which is well scalable with respect to the size of the space in which the vehicles move. A still further objective is to be able to leverage efficient available scheduling algorithms by embedding these algorithms into the loading-aware scheduling method. A particular objective is to propose a loading-aware scheduling method that is suitable for autonomous vehicles. It is furthermore an objective to provide a traffic planner with these characteristics.

At least some of these objectives are achieved by the invention as defined by the independent claims. The dependent claims relate to advantageous embodiments of the invention.

In a first aspect of the invention, there is provided a method of scheduling movements of a plurality of vehicles. It is assumed that each vehicle occupies one node in a shared set of planning nodes and is movable to other nodes along edges between pairs of the nodes, and that the vehicle has a time-variable internal state of being either loaded or not-loaded. The scheduling method comprises: defining a first subset of the planning nodes at which no loaded vehicle is allowed to stop; obtaining predefined routes of the vehicles; and scheduling the movements of the vehicles along said predefined routes while enforcing a no-stopping condition in the first subset of the planning nodes.

As used in this disclosure, "scheduling" refers to the process of associating vehicle movements to specific points in time. Put differently, while it can be determined unambiguously from a vehicle's route which planning nodes the vehicle will visit, it is the output of the scheduling step that indicates when this will happen. Productivity-oriented scheduling typically endeavors to find the optimal relative timing of the vehicles' movements and seeks to avoid, to a reasonable extent, unnecessary contention among the vehicles.

A scheduling method with the technical features according to the first aspect lends itself to resource-efficient implementation on a computer. The required special treatment of the loaded vehicle is a consequence of the simple no-stopping condition, and this condition can be expressed concisely in terms of the first subset of planning nodes, which does not grow with the number of vehicles to be scheduled. Further, since a no-stopping condition tends to reduce rather than increase the number of tentative movement schedules to be tried by the method, the computational effort grows only moderately with the size of the planning-node set. The first aspect of the invention thus provides a useful scheduling method that can be implemented with favorable computational complexity characteristics.

In some embodiments, the no-stopping condition applicable to the loaded vehicles (for the first subset of the planning nodes) can be enforced alongside a further no-stopping condition that is applicable to all vehicles (for a second subset of the planning nodes). Conveniently, the first subset can be defined after the second subset, e.g., in terms of an additional list of planning nodes.

In some embodiments, the second subset is defined based on an analysis of the planning nodes and edges with respect to the number of oncoming vehicle movements each planning node blocks when the planning node is occupied. This can be an efficient way of preventing contention among vehicles. Alternatively or additionally, the first subset is defined based on topographical information (e.g., elevation, road friction coefficient) associated with the planning nodes. This is in the interest of controlling the operational cost, e.g., by reducing energy consumption and mechanical wear.

In some embodiments, the scheduling observes a rule that not-loaded vehicles shall yield to loaded vehicles. This simple rule, which is locally enforceable and therefore advantageous from the point of view of computational complexity, is useful for reducing the total quantity of energy having to be converted from kinetic energy or into kinetic energy in the vehicle system.

In a second aspect of the invention, there is provided a traffic planner configured to schedule movements of a plurality of vehicles, in accordance with the various scheduling methods within the first aspect. The second aspect generally shares the effects and advantages of the first aspect of the invention, and it can be implemented with a corresponding degree of technical variation.

The invention further relates to a computer program containing instructions for causing a computer, or the traffic planner in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless this is explicitly stated.

### BRIEF DESCRIPTION OF THE DRAWINGS

Aspects and embodiments are now described, by way of example, with reference to the accompanying drawings, on which:
figure 1 illustrates a traffic system in which autonomous vehicles perform a material handling mission under the control of a traffic planner;
figure 2 is a flowchart of various scheduling method, according to embodiments herein;
figure 3 shows a set of planning nodes with connecting edges, which has been further annotated with vehicle routes and topographical information; and
figure 4 shows another set of planning nodes with connecting edges, which comprises a road section with two-way traffic which is too narrow for vehicles to meet.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

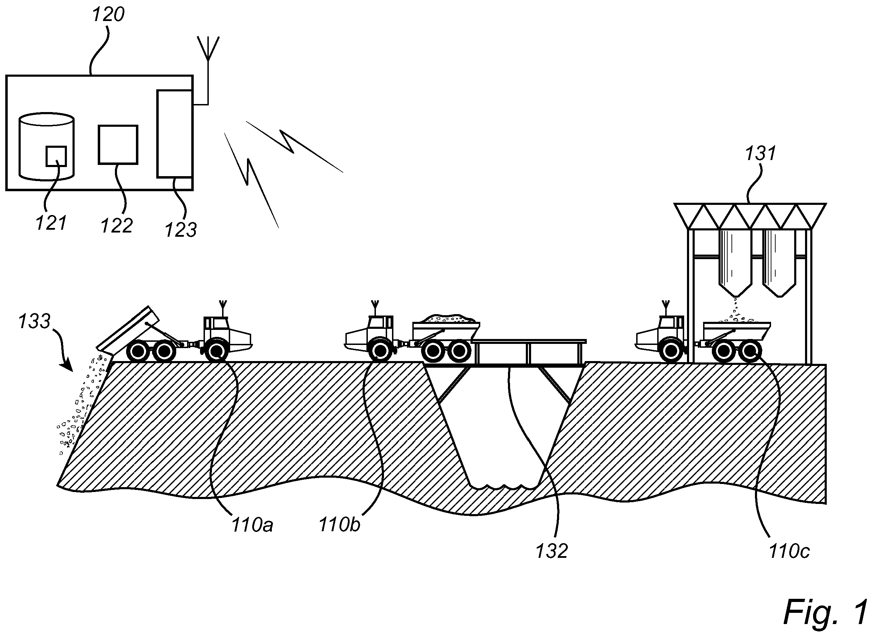

Figure 1 is a side view of a substantially flat trafficable environment, in which a plurality of vehicles 110a, 110b, 110c move along a common predefined route (not shown) that connects a loading station 131 and a chute 133 via a narrow bridge 132. The vehicles 110 are operated under the control of a traffic planner 120, having arranged therein memory 121 and processing circuitry 122 configured to perform a vehicle scheduling method, and a wireless interface 123 suitable to communicate wirelessly with analogous interfaces (not shown) in the vehicles 110. The communication may proceed over a local-area or wide-area wireless network, which may be of the cellular or non-cellular type. In the downlink direction, the wireless communication from the traffic planner 120 to the vehicles 110 may comprise motion commands for causing the vehicles 110 to realize the common predefined route, as scheduled by the vehicle scheduling method. In the uplink direction, the vehicles 110 may transmit status indications (e.g., position, heading, technical conditions, emergencies) as well as acknowledgements that specific motion commands have been carried out. In some embodiments, the traffic planner 120 is not an endpoint in the wireless communication with the vehicles 110, but the wireless communication passes via one or more intermediate devices, such as a base station in a cellular radio access network. In such embodiments, it may be considered that the traffic planner 120 is implemented in a distributed fashion, with the processing circuitry 122 and wireless interface 123 located in different physical devices.

When a vehicle 110 receives bulk material from the loading station 131, its total weight increases significantly (e.g., doubles), whereby an acceleration of a given magnitude becomes costlier, a braking action implies an increased mechanical wear and heating, etc. The moving loaded vehicle 110 also represents a greater collision hazard. It is thus desirable to configure the traffic planner 120 in such manner that loaded ones of the vehicles 110 are not required to stop and start unnecessarily, i.e., if an equivalent coordination of vehicle movements can be achieved by letting empty vehicles 110 wait for the loaded ones. For example, if two or more vehicles 110 are about to cross the narrow bridge 132, the loaded ones should be prioritized over the not-loaded vehicles.

The environment in figure 1 can be modeled as a set of planning nodes, wherein a shared trafficable resource, which can be occupied by at most one vehicle at a time. A planning node may for example be an intersection, a road segment, a waypoint, a maintenance or replenishment position. Conceivably, the loading station 131, the bridge 132, the chute 133, as well as road segments connecting these, could be represented in the traffic planner 120 as a set of planning nodes.

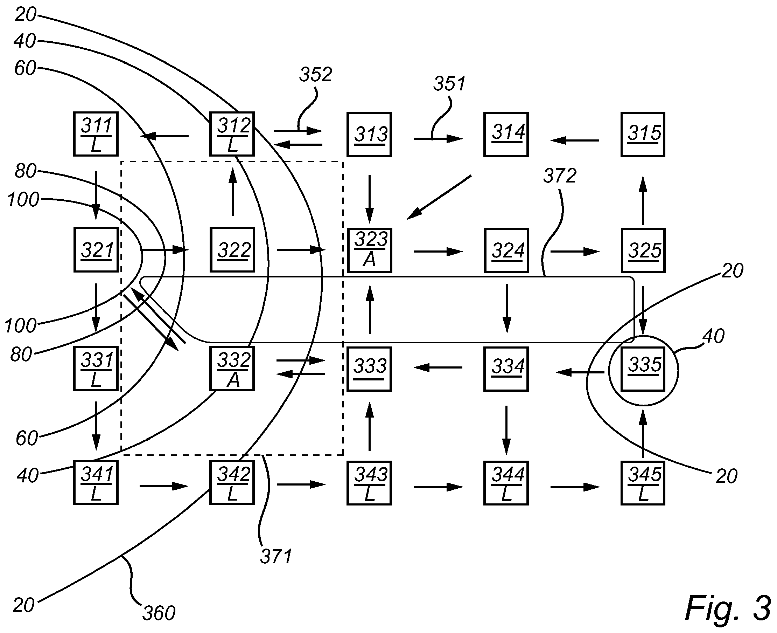

Figure 3 shows a set of planning nodes 311, 312, .... Some pairs of the planning nodes are connected by unidirectional edges 351 and others are connected by bidirectional edges 352. Information describing the planning nodes and their topology, as established by the edges 351, 352, is available to the traffic planner 120, as are two routes 371, 372 of vehicles which are to move between the planning nodes. The routes 371, 372 intersect at planning nodes planning nodes 323 and 333. In the present example, the traffic planner 120 further has at its disposal topographical information about the planning nodes in the form of contour lines (isohypses, here spaced by 20 units) 360, from which the elevation difference between each pair of planning nodes can be derived. In the example in figure 3, the planning nodes 321 and 335 are local maxima.

In those planning nodes in figure 3 which are labeled A, no vehicle at all is allowed to stop; instead the vehicle should continue past this planning node and stop no earlier than the next planning node. The label L for its part signifies that no loaded vehicle is allowed to stop. The labels A and L may be represented in information with which a traffic planner 120 (cf. figure 1) is configured. An owner of the traffic system (optionally, through an administrator or operator) may have assigned the "A" labels (second subset of the planning nodes) in this way to avoid blocking of the important five-way intersection at planning node 323 and to maintain the steep grade between planning nodes 321 and 333, which passes via planning node 332, as free as possible. The traffic system owner may have assigned the "L" labels (first subset of the planning nodes) as shown out of a desire to avoid maneuvers that are dangerous, wear-inducing, wasteful of energy or likely to worsen congestion in the system. Such maneuvers include the halting of a loaded vehicle without regenerative brakes in a negative grade (e.g., planning nodes 331, 341, 342), and the halting of a loaded vehicle in a positive grade without an overtaking lane (e.g., planning node 311).

In the memory 121 of the traffic planner 120, the distinction between loaded and not-loaded vehicles can be represented as an internal state of a vehicle. For example, if each vehicle is represented as a data structure expressing the vehicle's identity, type, position, technical conditions etc., the loading state can be expressed by a further (Boolean) variable. At each point in time during normal operation, a vehicle has exactly one of the defined values of the loading state. Possible loading state values include not-loaded and (fully) loaded. In some embodiment, the loading state can have intermediate values, such as semi-loaded, and subset of planning nodes can be defined for the purpose of configuring specific no-stopping conditions for these. Different rules for assigning a value to the loading state as either loaded and not-loaded based on reported information can be configured. For example, the loading state can be based on past geographical positions, e.g., that a vehicle which has visited the loading station 131 in figure 1 shall be considered loaded until its next visit at the chute 133, after which the value not-loaded is assigned. In a further example, the loading state is based on a measured load of the vehicle, e.g., in combination with a threshold percentage of the full loading capacity above which the vehicle shall be considered to be loaded. For purposes of this rule, the load can be measured by a vehicle-carried sensor (e.g., strain sensor) or a stationary sensor (e.g., weighbridge). The measured value of the load can either be reported to the traffic planner 120, which assigns a value to the loading state according to the percentage rule, or the vehicle/weighbridge can apply the percentage rule immediately and report the resulting loading state value to the traffic planner 120. A further option is to assign the loading state value based on a combination of the past geographical positions and a measured value of the load.

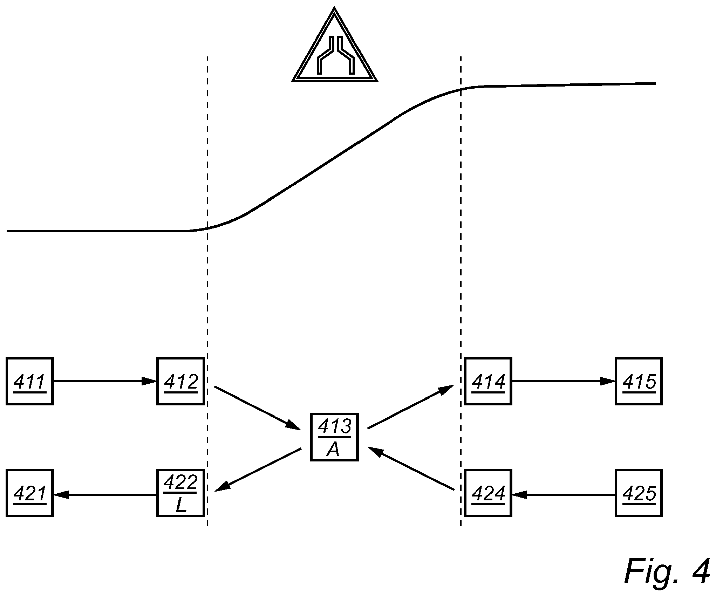

Figure 4 shows a further set of planning nodes 411, 412, ... with connecting unidirectional edges. An elevation profile is shown above the respective planning. The road segment between the vertical dashed lines is a single-lane section with bidirectional traffic. The single-lane section is too narrow for overtaking, and does not allow oncoming vehicles to pass. It may thus be advisable to prevent vehicles from dwelling at planning node 413, where it would block other vehicles' movements into and out of no less than four planning nodes 412, 414, 422, 424. Accordingly, as shown by the label A, a general no-stopping condition applies to planning node 413. In the interest of energy conservation, the planning node 422 at the bottom of the negative grade has been labeled L, which will prompt the scheduling of vehicle movements in such manner that oncoming loaded vehicles may use its kinetic energy to continue up to planning node 421.

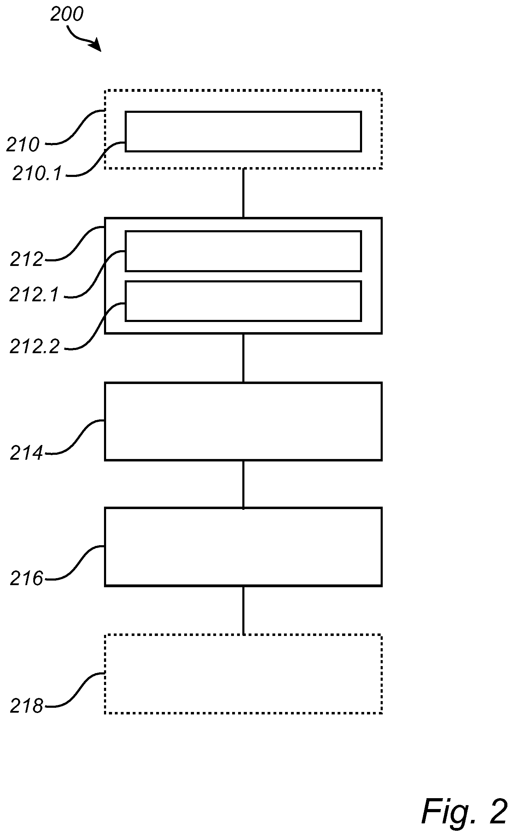

Figure 2 is a flowchart of a method 200 of scheduling movements of a plurality of vehicles 110. The method 200 is suitable for the above-described scenario, in which each vehicle occupies one node in a shared set of planning nodes 311, 312, ..., 411, 412, ... and is movable to other nodes along edges 351, 352 between pairs of the nodes (see figures 3 and 4). Further the execution of the method 200 assumes knowledge of an internal state of each vehicle which is either loaded or not-loaded. The method 200 may for example be implemented in the traffic planner 120.

In an optional first step 210 of the method, a subset of planning nodes ("second subset") is defined at which the scheduling method 200 shall not allow any vehicle 110 to stop. The second subset of planning nodes may be defined based on manual input from an operator. Alternatively or additionally, the second subset is defined based on the output from a preliminary substep 210.1 of analyzing the set of planning nodes and edges with respect to the number of oncoming vehicle movements that are blocked when one of the planning nodes is occupied. If the second subset is defined based on such considerations, the scheduling method 200 can reduce congestion-related problems in the traffic system.

In a second step 212 of the method, a subset of the planning nodes ("first subset") is defined at which no loaded vehicle is allowed to stop. The first subset may correspond to manual input from an operator. In one embodiment, which can be automated, a first substep 212.1 is executed, in which topographical information associated with the planning nodes is obtained, followed by a second substep 212.2, where the set of planning nodes and edges are analyzed with respect to the operational cost of stopping and/or starting a vehicle when loaded. It is emphasized that the presence of topographical considerations is not an essential feature of the invention; rather, the operator may have arrived at a suitable definition of the first subset based on experimentation, on inspection of topographical data, or on a combination of these and other factors.

In a third step 214, which may be executed before the first and second steps 210, 212 or parallel thereto, one or more predefined routes 371, 372 of the vehicles are obtained. The predefined routes 371, 372 include a sequence of planning nodes or an unordered set of planning nodes. The routes 371, 372 do not include times at which the planning nodes shall be visited, which are to be assigned by the present scheduling method 200. Two or more vehicles may have identical routes.

In a fourth step 216, the movements of the vehicles along said predefined routes 371, 372 are scheduled while enforcing a no-stopping condition in the first subset of the planning nodes and for the loaded vehicles. Optionally, a no-stopping condition in the first subset is enforced as well, without consideration of the vehicles' current loading states. The scheduling step 216 may refer to a partition of continuous time into epochs, and a schedule is to be determined for each vehicle and each epoch that indicates whether the vehicle shall be dwelling at one planning node or it shall be moving between planning nodes. From the schedule, it is possible to extract motion commands for the individual vehicles.

The scheduling may enforce a set of rules, such as:
Rule 1: All vehicles shall complete their predefined routes in minimal total time and/or at minimal total operational cost.
Rule 2: Two or more vehicles are allowed to move simultaneously.
Rule 3 (no-stopping condition 1): No loaded vehicle must stop at any planning node in the first subset.
Rule 4 (no-stopping condition 2): No vehicle must stop at any planning node in the second subset.
Optionally, the following rule may be added and enforced:
   Rule 5: A not-loaded vehicle shall yield to a loaded vehicles.
   This Rule 5 may be decisive when two vehicles compete for one planning node, as may be the case when both approach an intersection (e.g., planning node 323 in figure 3) and need to pass through the intersection to complete their routes. An implementation of the scheduling method 200 that enforces this rule is likely to let the loaded vehicle pass first, while the not-loaded vehicle is decelerated or temporarily halted.

The scheduling step 216 may be performed by executing an optimization process tending to increase productivity and/or to minimize the time it takes for the vehicles to execute their routes 371, 372. Productivity can be quantified as the number of useful transport work per unit time and/or per vehicle. For this purpose, a multitude of available scheduling algorithms and conflict-resolution algorithms can be used, including linear search combined with scoring (cost/reward function), various types of best-first search, graph-traversal methods, path-finding methods, A* search and similar algorithms.

In an optional fifth step 218, motion commands for realizing the routes as scheduled are fed to said plurality of vehicles.

The execution flow of the method 200 may need to be refreshed if the loading state of a vehicle changes from loaded to not-loaded or vice versa. Such loading-state changes may be foreseeable over time and may follow patterns that repeat along a route; for example, vehicles leaving the loading station 131 in figure 1 are always loaded, and vehicles leaving the chute 133 are always non-loaded. Further developments of the method 200 may include the loading state as part of the definition of a route 371, 372, e.g., by annotating the route with the probable state changes of the vehicles that travel on the route. This allows the loading-state changes to be taken care of beforehand, e.g. by computing an alternative schedule to which the traffic planner 120 can switch rather than run the method 200 anew. This way, frequent re-executions of the method 200 may be avoided.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A method (200) of scheduling movements of a plurality of vehicles (110), wherein each vehicle
- occupies one node in a shared set of planning nodes (311, 312, ...; 411, 412, ...) and is movable to other nodes along edges (351, 352) between pairs of the nodes, and
- has a time-variable internal state of being either loaded or not-loaded,
the method comprising:
obtaining (214) predefined routes (371, 372) of the vehicles; and
scheduling (216) the movements of the vehicles along said predefined routes,
**characterized by** defining (212) a first subset (L) of the planning nodes at which no loaded vehicle is allowed to stop,
wherein the movements of the vehicles along said predefined routes are scheduled (216) while enforcing a no-stopping condition in the first subset of the planning nodes.

2. The method of claim 1, further comprising:
defining (210) a second subset (A) of the planning nodes at which no vehicle is allowed to stop,
wherein the movements are scheduled while further enforcing the no-stopping condition in the second subset of the planning nodes.

3. The method of claim 2, wherein the second subset is defined (210) before the first subset is defined (212).

4. The method of claim 2 or 3, wherein the defining of the second subset of the planning nodes includes:
analyzing (210.1) the set of planning nodes and edges with respect to the number of oncoming vehicle movements each planning node blocks when the planning node is occupied.

5. The method of any of the preceding claims, wherein the defining of the first subset of the planning nodes includes:
obtaining (212.1) topographical information associated with the planning nodes, and
analyzing (212.2) the set of planning nodes and edges with respect to the operational cost of stopping and/or starting a vehicle when loaded.

6. The method of claim 5, wherein the topographical information includes elevation.

7. The method of any of the preceding claims, wherein the scheduling is performed while enforcing a rule that not-loaded vehicles shall yield to loaded vehicles.

8. The method of any of the preceding claims, wherein the scheduling includes executing an optimization process tending to increase productivity and/or to minimize route completion time.

9. The method of any of the preceding claims, wherein a planning node represents a shared trafficable resource, which can be occupied by at most one vehicle at a time.

10. The method of any of the preceding claims, wherein the edges are unidirectional.

11. The method of any of the preceding claims, wherein the vehicles are autonomous.

12. The method of any of the preceding claims, further comprising:
feeding (218) motion commands to said plurality of vehicles for realizing the routes as scheduled.

13. A traffic planner (120) configured to schedule movements of a plurality of vehicles (110), the traffic planner comprising memory (121) and processing circuitry (122) configured to perform the method of any of the preceding claims.

14. A computer program comprising instructions to cause the device of claim 13 to execute the steps of the method of any of claims 1 to 12.

## Patentansprüche

1. Verfahren (200) zur Planung von Bewegungen mehrerer Fahrzeuge (110), wobei jedes Fahrzeug
- einen Knoten in einem gemeinsam genutzten Satz von Planungsknoten (311, 312, ...; 411, 412, ...) belegt und entlang der Kanten (351, 352) zwischen den Knotenpaaren zu anderen Knoten beweglich ist, und
- einen zeitlich variablen internen Zustand aufweist, der entweder geladen oder nicht geladen ist,
wobei das Verfahren umfasst:
Erhalten (214) von vordefinierten Routen (371, 372) der Fahrzeuge; und
Planen (216) der Bewegungen der Fahrzeuge entlang der vordefinierten Routen,
**dadurch gekennzeichnet, dass** eine erste Untergruppe (L) der Planungsknoten definiert (212) wird, an denen kein beladenes Fahrzeug anhalten darf,
wobei die Bewegungen der Fahrzeuge entlang der vordefinierten Routen geplant (216) werden, während eine Halteverbotsbedingung in der ersten Untergruppe der Planungsknoten durchgesetzt wird.

2. Verfahren nach Anspruch 1, ferner umfassend:
Definieren (210) einer zweiten Untergruppe (A) der Planungsknoten, an denen kein Fahrzeug anhalten darf,
wobei die Bewegungen geplant werden, während die Halteverbotsbedingung in der zweiten Untergruppe der Planungsknoten weiter durchgesetzt wird.

3. Verfahren nach Anspruch 2, wobei die zweite Untergruppe definiert (210) wird, bevor die erste Untergruppe definiert (212) wird.

4. Verfahren nach Anspruch 2 oder 3, wobei das Definieren der zweiten Untergruppe der Planungsknoten umfasst:
Analysieren (210.1) des Satzes von Planungsknoten und -kanten im Hinblick auf die Anzahl der entgegenkommenden Fahrzeugbewegungen, die jeder Planungsknoten blockiert, wenn der Planungsknoten belegt ist.

5. Verfahren nach einem der vorhergehenden Ansprüche, wobei das Definieren der ersten Untergruppe der Planungsknoten umfasst:
Erhalten (212.1) von topographischen Informationen, die den Planungsknoten zugeordnet sind, und
Analysieren (212.2) des Satzes von Planungsknoten und -kanten im Hinblick auf die Betriebskosten für das Anhalten und/oder Starten eines Fahrzeugs unter Last.

6. Verfahren nach Anspruch 5, wobei die topografischen Informationen Höhenangaben umfassen.

7. Verfahren nach einem der vorhergehenden Ansprüche, wobei die Planung durchgeführt wird, während eine Regel durchgesetzt wird, dass nicht beladene Fahrzeuge beladenen Fahrzeugen Vorfahrt gewähren müssen.

8. Verfahren nach einem der vorhergehenden Ansprüche, wobei die Planung die Ausführung eines Optimierungsprozesses umfasst, der darauf abzielt, die Produktivität zu erhöhen und/oder die Zeit für die Routenabwicklung zu minimieren.

9. Verfahren nach einem der vorhergehenden Ansprüche, wobei ein Planungsknoten eine gemeinsam befahrbare Ressource darstellt, die jeweils von höchstens einem Fahrzeug belegt werden kann.

10. Verfahren nach einem der vorhergehenden Ansprüche, wobei die Kanten unidirektional sind.

11. Verfahren nach einem der vorhergehenden Ansprüche, wobei die Fahrzeuge autonom sind.

12. Verfahren nach einem der vorhergehenden Ansprüche, das ferner umfasst:
Zuführen (218) von Bewegungsbefehlen an die mehreren Fahrzeuge zur planmäßigen Durchführung der Routen.

13. Verkehrsplaner (120), der konfiguriert ist, um Bewegungen mehrerer Fahrzeuge (110) zu planen, wobei der Verkehrsplaner einen Speicher (121) und eine Verarbeitungsschaltung (122) umfasst, die konfiguriert sind, um das Verfahren nach einem der vorhergehenden Ansprüche durchzuführen.

14. Computerprogramm mit Anweisungen, die die Vorrichtung nach Anspruch 13 veranlassen, die Schritte des Verfahrens nach einem der Ansprüche 1 bis 12 auszuführen.

## Revendications

1. Procédé (200) de programmation des mouvements d'une pluralité de véhicules (110), chaque véhicule
- occupant un nœud dans un ensemble partagé de nœuds de planification (311, 312... ; 411, 412,...) et étant mobile vers d'autres nœuds le long des bords (351, 352) entre des paires de nœuds, et
- ayant un état interne variable dans le temps d'être soit chargé, soit non chargé, le procédé comprenant :
l'obtention (214) d'itinéraires prédéfinis (371, 372) des véhicules ; et
la planification (216) de déplacements des véhicules le long desdits itinéraires prédéfinis,
**caractérisé par** la définition (212) d'un premier sous-ensemble (1) des nœuds de planification où aucun véhicule chargé n'est autorisé à s'arrêter,
les déplacements des véhicules le long desdits itinéraires prédéfinis étant programmés (216) tout en appliquant une condition de non-arrêt dans le premier sous-ensemble des nœuds de planification.

2. Procédé selon la revendication 1, comprenant en outre :
la définition (210) d'un second sous-ensemble (A) des nœuds de planification où aucun véhicule n'est autorisé à s'arrêter,
les mouvements étant programmés tout en continuant à appliquer la condition de non-arrêt dans le second sous-ensemble des nœuds de planification.

3. Procédé selon la revendication 2, dans lequel le second sous-ensemble est défini (210) avant que le premier sous-ensemble ne soit défini (212).

4. Procédé selon la revendication 2 ou 3, dans lequel la définition du second sous-ensemble des nœuds de planification comprend :
l'analyse (210.1) de l'ensemble de nœuds de planification et de bords par rapport au nombre de mouvements de véhicules approchant, chaque nœud de planification étant bloqué lorsque le nœud de planification est occupé.

5. Procédé selon l'une quelconque des revendications précédentes, dans lequel la définition du premier sous-ensemble des nœuds de planification comprend :
l'obtention (212.1) d'informations topographiques associées aux nœuds de planification, et
l'analyse (212.2) de l'ensemble de nœuds de planification et de bords par rapport au coût opérationnel de l'arrêt et/ou du démarrage d'un véhicule lorsqu'il est chargé.

6. Procédé selon la revendication 5, dans lequel les informations topographiques comprennent l'élévation.

7. Procédé selon l'une quelconque des revendications précédentes, dans lequel la programmation est réalisée tout en appliquant une règle selon laquelle les véhicules non chargés doivent céder aux véhicules chargés.

8. Procédé selon l'une quelconque des revendications précédentes, dans lequel la programmation comprend l'exécution d'un processus d'optimisation tendant à augmenter la productivité et/ou à minimiser le temps de réalisation d'itinéraire.

9. Procédé selon l'une quelconque des revendications précédentes, dans lequel un nœud de planification représente une ressource partagée praticable, qui peut être occupée par au plus un véhicule à la fois.

10. Procédé selon l'une quelconque des revendications précédentes, dans lequel les bords sont unidirectionnels.

11. Procédé selon l'une quelconque des revendications précédentes, dans lequel les véhicules sont autonomes.

12. Procédé selon l'une quelconque des revendications précédentes, comprenant en outre :
la fourniture (218) de commandes de mouvement à ladite pluralité de véhicules pour réaliser les itinéraires comme prévu.

13. Planificateur de trafic (120) configuré pour programmer les mouvements d'une pluralité de véhicules (110), le planificateur de trafic comprenant une mémoire (121) et un circuit de traitement (122) configuré pour exécuter le procédé selon l'une quelconque des revendications précédentes.

14. Programme informatique comprenant des instructions pour amener le dispositif selon la revendication 13 à exécuter les étapes du procédé selon l'une quelconque des revendications 1 à 12.
